# EUROPEAN PATENT APPLICATION

(11) **EP 2 075 048 A1**
(43) Date of publication of application: **01.07.2009**
(21) Application number: 07123499.1
(22) Date of filing: 18.12.2007
(51) Int. Cl.: B01D 46/24

(54) **Method and biological filtering system with regeneration of filtering**

(71) Applicant: Dall'Oglio, Stefano, 20146 Milano (IT); Dall'Oglio, Giorgio, 20146 Milano (IT)
(72) Inventor: Dall'Oglio, Stefano, 20146 Milano (IT); Dall'Oglio, Giorgio, 20146 Milano (IT)
(74) Representative: Gervasi, Gemma

(57) **Abstract**

Method and filtering system of biological contaminants, both bacterial and fungus, to be used in indoors or semi-indoors air conditioning apparatuses - even in the presence of people in said environments - characterized by an appropriate system of destruction of the collected pollutants and by means of automatic activation of said destruction system.

## Description

### FIELD OF INVENTION

This invention relates to the cleaning treatment of air by filtering bacterial and fungus contaminants, to be used in recirculated air ventilation systems for indoor environments, characterized by the presence of an appropriate system of destruction of the collected pollutants, that can be activate intermittently, and equipped with means of automatic adjustment of the duration of said stages of destruction.

### STATE OF THE ART

The number of apparatuses of filtering of biological pollutants grows proportionally to the need to limit or prevent bacterial or fungal pollution in totally or partially indoor environments for variable duration time periods, such as surgical rooms, hospital environments, rest homes for the elderly, pharmaceutical factories, and generally white chambers for various kinds of production and also aircrafts and space vehicles.

For the latter, in particular, the problem arises not only for the filtration aspect, but also for the management of filters that must provide for the replacement of the filtering material and the confinement and inactivation of any filtered biological material: this operation, therefore, implies the need to treat the filtering material to be replaced by means of biological inactivation, before its replacement, and, subsequently the need to collect the waste material that must be made ready for destruction.

In some cases, attempts have been made to remove the bacterial component captured by the filters through the use of chemicals with bacteriostatic properties, which are sucked up by the circulating system of the fluid to be filtered before the filter to sterilize: This technique is frequently used for the filters of air conditioning systems - especially after having discovered the risk that bacteria like Legionella Pneumoniae are spread- by using various vaporizable products such as, for example, quaternary ammonium compounds.

This method obviously requires that the areas downstream of the filter to be treated may be evacuated, at least for a certain lapse of time after the release of the bacteriostatic agent, in order to avoid the risk of inhalation of the chemicals used and of the biological material from the bacterial degradation.

The literature describes ceramic filters for filtering both liquid and gas, and, by way of example, we mention the product for the purification of water by Katadyn Products Inc., Birkenweg 4, 8304 Wallisellen / Switzerland, and the filters for exhaust gases of factories described in the publication Alvin, M. A. 1999. Hot Gas Filter Development and Performance - High Temperature Gas Cleaning, Vol.2, edited by A. Dittler et al., Karlsruhe, 455-467.

The procedure for cleaning these filters always implies a mechanical removal and separation of retained materials and wash cycles to improve the conditions for the functional restoration of ceramic components.

There is also a system, described in US patent 4,707,167, for the treatment of outgoing air from contaminated environments or incoming air in sterile environments, based on the continuous heating at high-temperature of the mass of air to filter. This system involves high operating costs since it requires the heating at high temperature of the entire air mass to filter (ref. description column 4, from line 21 forward), and, since the outgoing air after treatment is at high temperature, if applied to inhabited environments necessarily requires the further use of a cooling system to return the air to room temperature.

### PURPOSE OF INVENTION

The purpose of this invention is to introduce a method and system for the treatment of air by filtration through a ceramic filter element, in which a system is integrated, that can be automated, for the regeneration of the filter by means of a flow of air at high temperature activated by short pulses, with subsequent collection of the sole inactive biological residue: this system can therefore be used to treat filtering indoors or semi-indoors environments in the presence of people.

### SUMMARY OF INVENTION

This invention therefore introduces a filtering device, and the method associated with the same, consisting of a first container comprising a main filter for the fluid at issue, provided with intercepting valves; a lodgement detector of preferably of manostatic type; a hopper collecting particles resulting from the filtering that are laid in a extractable tray to make their removal easier; a possible second container comprising a filter destined to intercept of coarse material, characterized by porosity exceeding tens of microns and that can be cleaned by mechanical action or washing; means of ventilation; intercepting valves; and means of production of hot air at high temperature.

### BRIEF DESCRIPTION OF DRAWINGS

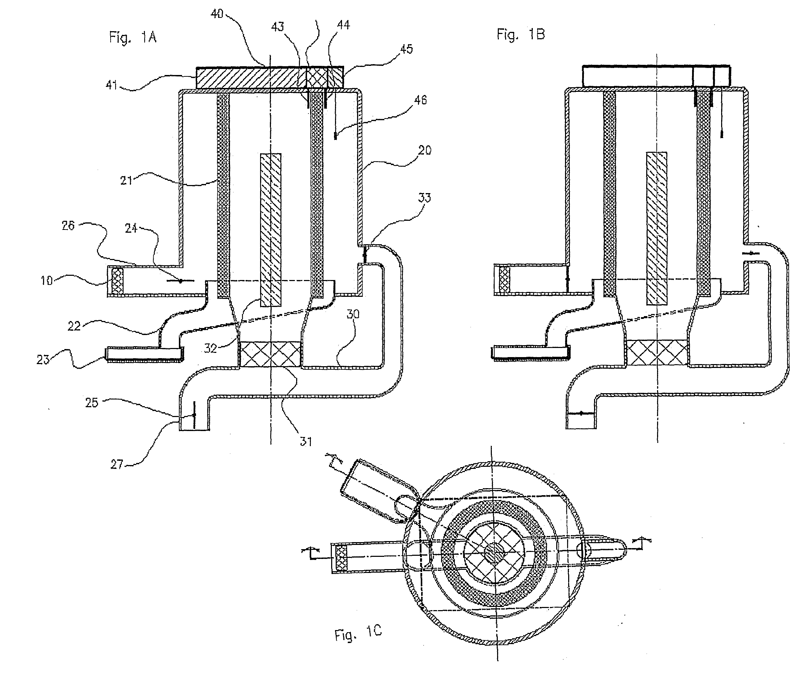

Fig. 1 (A - C) illustrates the filtering device in accordance with the present invention including plain and perspective views in two different modes of operation.

### DETAILED DESCRIPTION OF INVENTION

In likely conditions of employment of the filtering of breathable air in indoors or semi-indoors environments, the method and system described in this invention allows the interception of dust and bacteria present in the incoming air at room temperature, and the subsequent cleaning of the filter which requires the use of a flow of air at high temperature circulated in the opposite direction to the normal flow of air to be filtered, with timing regulated by an appropriate system which is described below. Since the duration of the inactivation process of the biologically active material is short, the quantity of heat required is very small, and does not involve a significant increase in the temperature of the environment in which the system is operating.

The inactivation of all biological materials intercepted is achieved when the temperature exceeds 250 ° C, with evaporation of the water component, and the separation of mineral dust particles typically retained for adhesion, that are removed thanks to the mechanical action of the flow of hot air in the direction opposite to that of the normal flow of air to be filtered.

The beginning of the sterilization process provides for different activation conditions, among which we cite as examples: the activation based on the amount of time of operation of the filter passed as of the last sterilization, by predetermining the lapse of time; the activation based on the amount of the load loss measured on the basis of the differential pressure on the filtering cartridge; and the automatic activation when the system is shut down.

The duration of the sterilizing air pulse is calculated automatically and the total duration of the activation is set preferably to be equal to the sum of the necessary time to achieve the maximum temperature of the air coming out of the electric heater and of the total time of the presence of air over the temperature threshold set for the action of incineration of the biological pollutants. Such temperature is measured by the temperature sensor placed at the output of the filter to be sterilized. It is furthermore possible to set said duration of the sterilizing air pulse by direct manual control.

When the system is working, the material removed from the filter, consisting of inert particles and carbon residue of biologically active pollutants, is dragged by the flow of air to a separating room - preferably of cyclone-type or with dishes - having a cross-section much bigger than that of the room containing the filter, so that the flow of air loses speed, and the particles to be collected are separated and are stocked in a container which can be removed in the subsequent cleaning phase of the unit.

The above described filtering system can be carried out by a device, according to the present invention, characterized by the use of several elements as shown in the following description and in the attached figures.

In Fig. 1 we see the details of the device structure in accordance with the present invention: there are three distinct modules:
- A filtering cell 20;
- A unit handling air 30;
- A control unit 40;

Said cell filter 20 comprises:
- A input coarse filter cartridge 10,
- A ceramic cartridge filter 21;
- A conveying dust hopper 22;
- A removable drawer for the colleted dust 23;
- A first valve intercepting air 24 inserted in the incoming air tube 26;
- A second valve intercepting air 25 inserted in the outgoing air tube 27;

Said unit handling air 30 comprises:
- A bidirectional electromechanical fan 31;
- An electric heater 32;
- A third valve intercepting air 33 inserted in the outgoing air tube from the filtering cell 20;

Such control unit 40 comprises:
- An electronic group 41 comprising both mains supply circuits and an electronic power circuit adapted to control the pulse of hot air and a management microprocessor able to elaborate the transductors' signals and to manage the operation sequences of the different functioning cycles.
- A differential pressure sensor 42 associated by means of the two tubes 43 and 44 to the two sides of the filtering cartridge 21;
- A temperature sensor 45 associated by means of the bulb 46 to the volume of air comprised between the filter 21 and the filtering cell 20.

The system allows two different operating conditions: one of normal functioning, shown in Fig. 1A, where the air sucked up from the environment is filtered through the filter 10, the valve intercepting air 24, the fan 31, the filtering cartridge 21, and the exit towards the environment through the valve intercepting air 25 with the valve intercepting air 33 closed; and a second condition of cleaning functioning of the filter shown in Fig. 1B with movement of the airflow in the opposite direction through the filtering cartridge 21, with heating of the air sucked up by the filtering cell 20 through the valve intercepting air 33, the fan 31, the electrical heater 32, the return in the filtering cell 20, and the flow in the opposite direction to that of normal functioning through the filtering cartridge 21. The electronic control unit 40 allows changing from the normal functioning condition with filtering of environmental air to that of cleaning of the filter cartridge 21 through the driving of intercepting valves 33, 24 and 25.

There are several ways to activate the cleaning cycle, among which we cite as examples the automatic mode based on the time of operation of the filter to be set according to the environmental conditions; the activation based on the exceeding of a threshold of the differential pressure provided by the pressure sensor 42 on filtering cartridge 21 consequent to the collection of obstructive material; the automatic activation when the system is shut down, which is needed to leave the filter clean when the same is in stand-by.

The duration of the cleaning mode is managed by the microprocessor in order to ensure that the air temperature measured by the temperature sensor 45 exceeds a certain threshold value (eg 250 Celsius degrees) for at least 30 seconds.

## Claims

1. Filtering device comprising: a filtering cell (20), a unit handling air (30), a control unit (40) **characterized by** the fact that the filtering cell (20) comprises: a first input filter (10), a second filter (21), a dust conveyor hopper (22), a removable drawer to collect dust (23), a first valve intercepting air (24) associated with the incoming air pipe (26), a second valve intercepting air (25) associated with the outgoing air pipe (27).

2. Device according to claim 1 **characterized in that** said unit handling air (30) comprises: a bidirectional fan (31), an electric heater (32), a third valve intercepting air (33) associated with the outgoing air pipe from said filtering cell (20).

3. Device according to claims 1 - 2 **characterised in that** said control unit (40) comprises: an electronic group (41), an obstruction detector, a temperature sensor (45) associated through the bulb (46) to the volume of air between said filter (21) and said filtering cell (20).

4. Device according to claims 1 - 3 **characterized in that** this obstruction detector comprises a differential pressure sensor (42) associated by means of two special pipes (43, 44) to the two sides of that filter (21).

5. Device according to claims 1 - 4 **characterized in that** said first input filter (10) comprises a coarse filter cartridge and said second filter (21) comprises a ceramic filter cartridge.

6. Device according to claims 3 - 5 **characterized in that** said electronic group (41) comprises network power circuits, an electronic power circuit able to control the pulse of hot air and a management microprocessor able to elaborate the transductors signals and to manage the operational sequences of the various functioning cycles.

7. Device according to claims 2 - 6 **characterized in that** said fan (31) is electromechanical.

8. Filtering method comprising the following steps:
A) Interception of dust and bacteria present in the volume of incoming air at room temperature in a filter device.
B) Introduction in said filter device of a flow of air at high temperature circulating in the opposite direction to the normal flow of air to filter, with adjustable duration and timing, and designed to clean and disinfect said filtering device through the inactivation of biologically active material intercepted in step a)
C) Collection of material separated from the filtering device in a special room constituting a separator and then in a removable container.
D) Removal of the material collected in step C) and cleaning of said removable container.

9. Filtering method according to claim 8 **characterized in that** the special chamber in step C) is a cyclonic separator or with dishes having transversal section bigger than the room containing the filter of said filtering device, in order to ensure that the flow of air loses speed, and the particles to be collected are separated and collected in the removable container.

10. Filtering method according to claims 8 - 9 **characterised in that** said step B) is started depending on the conditions of activation chosen among: activation by the time of functioning of the filtering device since the last sterilization with predetermination of the time shift; activation according to the extent of the pressure drop measured by the differential pressure on the filtering cartridge, automatic activation when the filtering system is shut down.

11. Filtering method according to claims 8 - 10 **characterized in that** the flow of air used in step B) has a temperature greater than 250 centigrade degrees.

12. Filtering method according to claims 8 - 11 **characterized in that** the duration of the sterilizing air flow in step B) is adjusted automatically and set approximately to be equal to the amount of time required to reach the maximum temperature of the air exiting the electric heater destined to its heating plus the total time of presence of air exceeding the threshold set for the incineration action of the biological pollutants. Said temperature is measured by a temperature sensor located on the output of the filter to be sterilized inside said filtering device.

13. Filtering method according to claims 8 - 12 **characterized in that** the duration of the sterilizing air flow in step B) is adjusted by direct manual control.

14. Filtering method according to claims 8 - 12 **characterized in that** said filtering device is the device according to claims 1 - 6.
